# EUROPEAN PATENT APPLICATION

(11) **EP 4 311 995 A1**
(43) Date of publication of application: **31.01.2024**
(21) Application number: 22186774.0
(22) Date of filing: 25.07.2022
(51) Int. Cl.: F28F 9/02, F28F 3/12, F28D 1/03

(54) **THERMAL CONTROL DEVICE, ESPECIALLY FOR COOLING AN ELECTRICAL COMPONENT**

(71) Applicant: VALEO SYSTEMES THERMIQUES, 78320 Le Mesnil Saint-Denis (FR)
(72) Inventor: SUS, Pawel, 96476 Bad Rodach (DE); GENGER, Michael, 96476 Bad Rodach (DE); SIMON, Frederic, 96476 Bad Rodach (DE)
(74) Representative: Valeo Systèmes Thermiques

(57) **Abstract**

A thermal control device (1), in particular a cooling device, for an electrical component liable to give off heat during its operation, in particular for an electrical energy storage module, this device comprising an upper plate and a lower plate (2) assembled with the upper plate in order to form together a plurality of circulation channels for a heat transfer fluid, in particular a cooling fluid,
wherein at least a channel (3) divides in a plurality of subsequent channels (4), in the direction of fluid flow (F), said subsequent channels 4 each comprising a body having two ends, their first end forming the entry of the subsequent channels (4) and joining the channel from which it divides, said first end having a reduced section (5) compared to the body of the subsequent channel.

## Description

### FIELD OF INVENTION

The present invention relates to a thermal control device, in particular a cooling device, in particular for an electrical component which may generate heat during its operation, in particular a device for cooling at least one battery or battery cell of a motor vehicle.

### BACKGROUND

Vehicle batteries, in particular for electric vehicles or hybrid vehicles, must be kept at the desired temperature as much as possible, which is why so-called cooling devices are used for vehicle batteries. These cooling devices comprise cooling plates through which a cooling liquid flows. The cooling plates are installed on the outside of the batteries, as far as possible without gaps, in order to dissipate the heat or to heat the battery. Cooling devices are known in which the cooling plate consists of two plate parts which are normally attached directly to each other. Here, the first plate part is preferably flat, and the second plate part is preferably a deep-drawn or deformed metal sheet which has meandering depressions. Said depressions are closed by the flat plate portion which is attached to the deep-drawn plate portion, so that refrigerant ducts are formed. Patent EP 2 828 922 B1 describes such a device.

None of the prior art addresses the problem of stress concentration and mechanical failure, at the division of a channel into two or more subsequent channel. Indeed, these embranchments of a plurality of channel from a main one shows high level of stress in the junctions areas, where pressure is acting on the walls of the channel. The wall thickness being thinner as possible, this may results in cracks or leaks, or in need of additional thickness, like the document FR3114873A1 which teaches to use reinforcement elements.

The present invention aims to improve this type of device in a different way.

Indeed, there is a need for a battery cooler with a robust channel configuration for forming a secure channel path with reduced applied stress on junction areas, especially T-junctions.

### OBJECTS

The present invention solves this problem by a thermal control device, in particular a cooling device, for an electrical component liable to give off heat during its operation, in particular for an electrical energy storage module, this device comprising an upper plate and a lower plate assembled with the upper plate in order to form together a plurality of circulation channels for a heat transfer fluid, in particular a cooling fluid, wherein at least a channel divides in a plurality of subsequent channels, in the direction of fluid flow, said subsequent channels each comprising a body having two ends, their first end forming the entry of the subsequent channels and joining the channel from which it divides, said first end having a reduced section compared to the body of the subsequent channel.

In this type of device, there are stress concentrations in the areas where the fluid must make turns, reversals or ramifications, for example non-linear, especially in the distribution, collection or reversal areas of the fluid flow. In order to avoid deformation or leak in these areas, we use particular shapes, preferably obtained by stamping, which are modifying the section of the channels according to the invention.

It allows reduction of the stress in the junction area by reducing the channel entry section.

According to one aspect of the invention, the reduced section in each of the subsequent channel is formed by at least a deflector element located in the subsequent channels, each said deflector element extending at least through their respective subsequent channel.

According to one aspect of the invention, the deflector elements also extend through the channel the subsequent channel is joining.

It has been noted that this solution could increase the pressure drop which could need to a bigger pump in order to make the fluid circulate, or a bigger energy consumption.

Consequently, there could also be a need for a battery cooler with a secure channel path that does not increase too much the pressure drop in this area.

According to one aspect of the invention, the subsequent channels comprise the reduction of section only located on one side of the end of subsequent channels having a reduced section, at the side facing the fluid flow so as to direct the flow..

In other terms, the reduction of section, which could be formed by a deflector element is located on the channel downstream wall and is configured to steer the direction of the flow.

This solution obviates the problems of stress concentration in the area of channels connections and increase of pressure drop faced in conventional connection systems while allowing the fluid flow to be steered between the subsequent channels.

According to one aspect of the invention, at least one of said subsequent channels each comprising a second end and joining a common channel, in the direction of fluid flow, said second end forming the outlet of the subsequent channels and having a reduced section compared to the body of its channel.

In some embodiments, the reduced section, preferably the deflector elements, located at the second end of the subsequent channel are located on both sides of the channel.

According to one aspect of the invention, the first end of the subsequent channels have a reduced section (5) compared to the channel upstream from which it divides from.

According to one aspect of the invention, at least one of the subsequent channels is divided into a plurality of subsequent channels, in the direction of fluid flow, which also have a reduced section compared to the body of the channels or compared to the channel it is joining, the reduced section preferably formed by deflector elements.

According to one aspect of the invention, the reduced section located at the end of the channels represents a reduction comprised between 5% and 50%, preferably 5% to 40% of the channel body.

According to one aspect of the invention, the length, measured in a flow direction of the fluid, of the reduced section located at the end of the channels represents less than 40%, preferably 30% of the channel body.

According to one aspect of the invention, the channels and deflectors 5 elements are formed as one element by stamping the lower plate.

According to one aspect of the invention, at least one of the subsequent channels is divided in two subsequent channels perpendicular to each other at the division zone.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates a schematic view from below of a part of a channel plate used in a battery cooler according to the prior art.
FIG. 2 illustrates a schematic view from below of a channel plate according to a first embodiment of the present invention.
FIG. 3 illustrates a schematic view from below of a channel plate according to a second embodiment of the present invention.
FIG. 4 illustrates a schematic view from below of a channel plate according to a third embodiment of the present invention.
FIG. 5 illustrates a schematic view from below of a channel plate according to a fourth embodiment of the present invention.
FIG. 6 illustrates a schematic view from below of a channel plate according to another embodiment similar to the fourth embodiment.

### DETAILED DESCRIPTION

The present invention is explained with example of battery cooler, wherein the battery cooler comprising an upper plate and a lower plate 2 assembled with the upper plate in order to form together a plurality of circulation channels for a heat transfer fluid, in particular a cooling fluid, wherein at least a channel divides in a plurality of subsequent channels 4, in the direction of fluid flow, said subsequent channels 4 each comprising a body having two ends, their first end forming the entry of the subsequent channels 4 and joining the channel from which it divides, said first end having a reduced section compared to the body of the subsequent channel.

The cooling fluid can be a coolant fluid such as a mix of water and glycol, or a refrigerant, such as a fluid selected from the following refrigerants R134a, R1234yf or R744. The cooling fluid can be a liquid or a gas, or can be diphasic in the working conditions of the present invention.

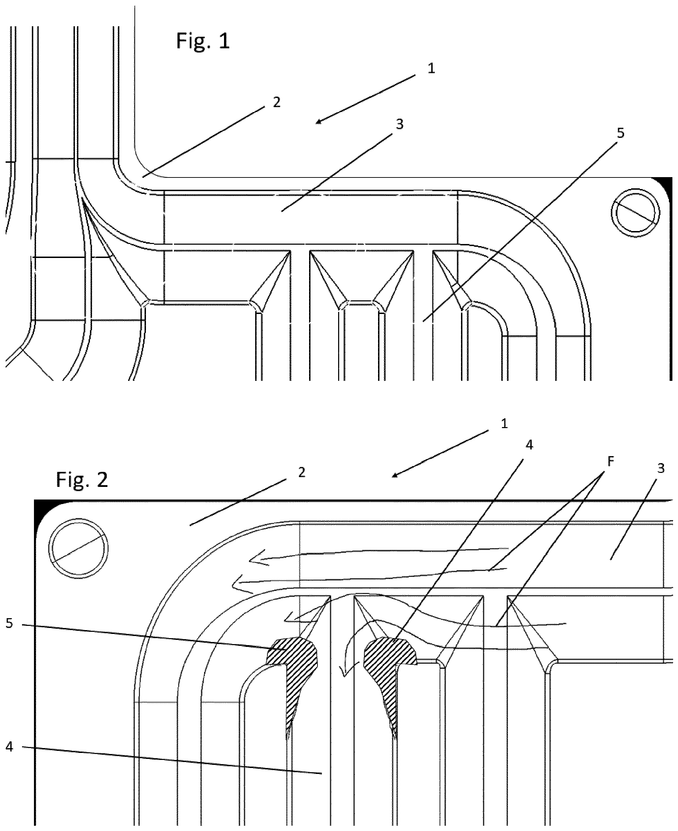

Fig. 1 shows the configuration of the channels in the channel plate of the battery cooler from the prior art. These channels retains their section and width along the whole plate. It has been found that at the junctions or ramifications of channels, there is a stress concentration which could deform or break the channel plate, resulting in leakage and/or thermal runaway of electric components such as cells.

In certain embodiments from the prior art, the channel ramifications are configured to make soft turns in order to limit these stress, but it is done at the expense of volume and efficiency.

In certain embodiments from the prior art, the channel section can be reduced gradually on the whole body following the fluid flow in order to improve the thermal exchange of the tube to retain the same capacity while the fluid inside the channel is getting warmer as it takes heat along its path.

However, there is no specific reduction of the width/section of the channel aiming at stress reduction in the area of channels connections.

FIG. 2 illustrates an example of embodiment according to the present invention. Indeed, the channel section 5 at the junction between two channels has been reduced, here from both sides of the channel by deflectors 5.

In this document, the terms "deflector" and "deflector element" carry the same meaning of an element defined by its function of deflecting and/or steering the fluid that comes in contacts with it, rather than a structural definition.

This reduction of the section of the channel allows a reduction of the stress concentration.

It should be noted that the deflectors 5 can be form as one piece with the channel plate, for example by stamping at the same time both the channels and the deflectors 5. In other embodiments, the deflectors 5 are added after the forming of the channel by welding, gluing or such.

However, it has been noted that such embodiment increases the pressure drop because of the reduced section 5.

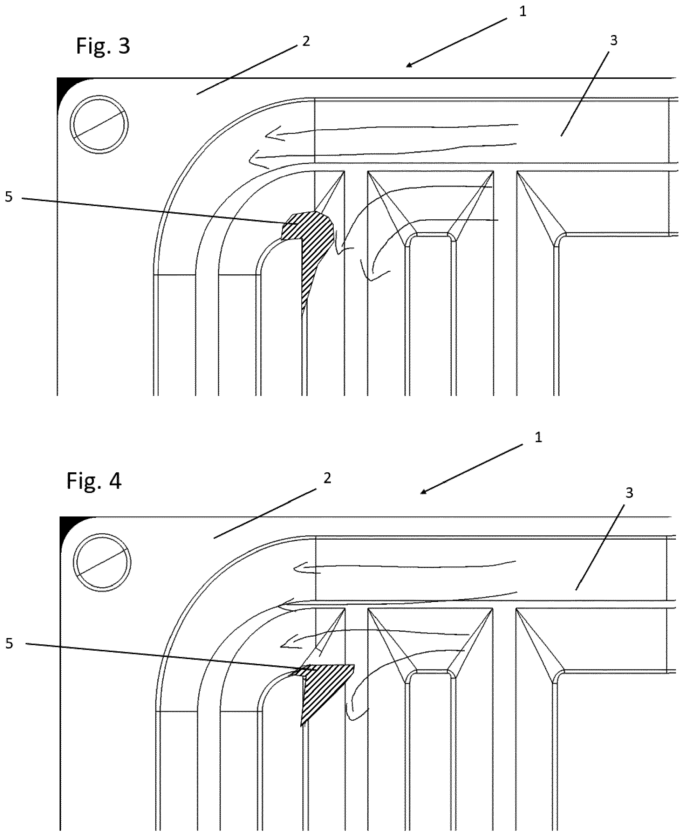

In some embodiments, as represented in Fig. 3 as a non-limitative example of the invention, the subsequent channel comprises only one deflector, preferably on the side of the channel facing the fluid flow. In other words, the deflector 5 is placed on the downstream side and act as a steering element by splitting the fluid between the subsequent channels 4. In this embodiment, the deflector 5 extends both in the subsequent channel and in the upstream channel, but it could be extending only in the subsequent channel, depending on the configuration of the channels and the objective regarding fluid flow optimization.

Indeed, Fig. 4 shows another embodiment with the subsequent channel also comprising one deflector 5 located the side of the channel facing the fluid flow but with the deflector 5 only extending in the subsequent channel.

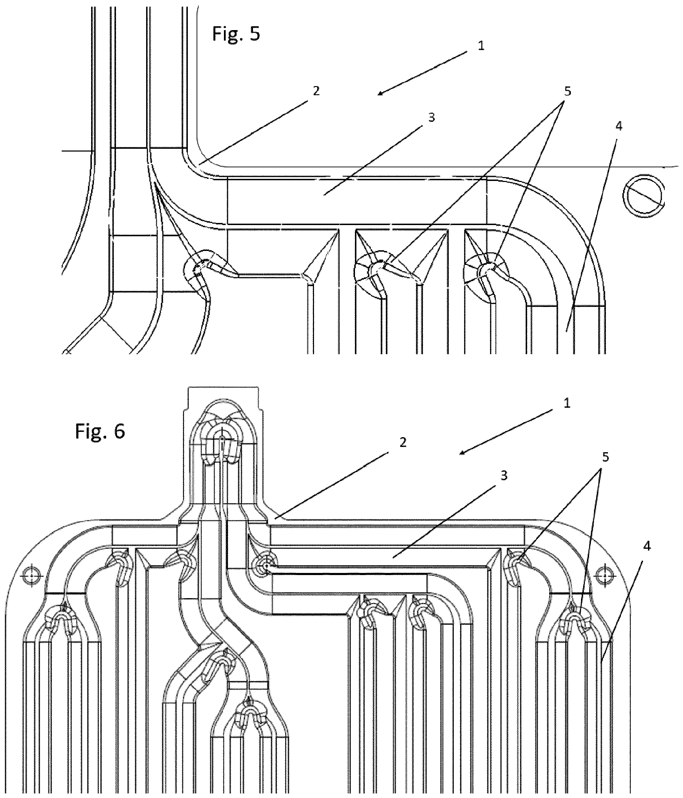

Fig. 5 and Fig. 6 represent embodiments where the deflectors 5 are formed within the channels configuration by stamping. In these embodiments, all the subsequent channels 4 comprises reduced section 5 at their junction areas, but in some other embodiments, only some of the channels comprises them. Fig. 6 also show subsequent channels 4 which divides further into some other subsequent channels 4, those also comprising the same section reduction 5 according to the invention.

In some embodiments not represented, the second end of the subsequent channel, located downstream, also comprise a section reduction 5, for the same purpose of stress reduction without increasing a lot the pressure drop.

In some embodiments, the reduced section 5, preferably the deflector 5 elements, located at the second end of the subsequent channel are located on both sides of the channel.

The channels of the channel plate can be configured to be used as a I-flow, as a U-flow or a combination of them.

In any case, the invention cannot and should not be limited to the embodiments specifically described in this document, as other embodiments might exist. The invention shall spread to any equivalent means and any technically operating combination of means.

## Claims

1. A thermal control device (1), in particular a cooling device, for an electrical component liable to give off heat during its operation, in particular for an electrical energy storage module, this device comprising an upper plate and a lower plate (2) assembled with the upper plate in order to form together a plurality of circulation channels for a heat transfer fluid, in particular a cooling fluid,
wherein at least a channel (3) divides in a plurality of subsequent channels (4), in the direction of fluid flow (F), said subsequent channels 4 each comprising a body having two ends, their first end forming the entry of the subsequent channels (4) and
joining the channel from which it divides, said first end having a reduced section (5) compared to the body of the subsequent channel.

2. A thermal control device 1 as claimed in claim 1, wherein the reduced section in each of the subsequent channel is formed by at least a deflector element (5) located in the subsequent channels (4), each said deflector element 5 extending through their respective subsequent channel.

3. A thermal control device 1 as claimed in claim 2, wherein the deflector elements 5 also extend through the channel the subsequent channel is joining.

4. A thermal control device 1 as claimed in claim 3, wherein the deflector element 5 is only located on one side of the end of subsequent channels 4 having a reduced section 5, at the side facing the fluid flow (F) so as to direct the flow.

5. A thermal control device 1 as claimed in any of preceding claims, wherein at least one of said subsequent channels 4 each comprising a second end and joining a common channel, in the direction of fluid flow, said second end forming the outlet of the subsequent channels 4 and having a reduced section 5 compared to the body of its channel.

6. A thermal control device 1 as claimed in any of preceding claims, wherein the first end of the subsequent channels 4 have a reduced section 5 (5) compared to the channel upstream from which it divides.

7. A thermal control device 1 as claimed in any of preceding claims, wherein at least one of the subsequent channels 4 is divided into a plurality of subsequent channels 4, in the direction of fluid flow, which also have a reduced section 5 compared to the body of the channels or compared to the channel it is joining, the reduced section preferably formed by deflector elements 5.

8. A thermal control device 1 as claimed any of preceding claims, wherein the reduced section 5 located at the end of the channels represents a reduction comprised between 5% and 50%, preferably 5% to 40% of the channel body.

9. A thermal control device 1 as claimed in any of preceding claims, wherein the length, measured in a flow direction of the fluid, of the reduced section 5 located at the end of the channels represents less than 40%, preferably 30% of the channel body.

10. A thermal control device 1 as claimed in any of preceding claims, wherein the channels and deflectors elements 5 are formed as one element by stamping the lower plate 2.

11. A thermal control device 1 as claimed in any of preceding claims, wherein at least one of the subsequent channels 4 is divided in two subsequent channels 4 perpendicular to each other at the division zone.

12. A cooling system comprising at least one thermal control device 1 as claimed in any of preceding claims, and at least one electrical energy storage module, the cooling system bein in contact with the electrical energy storage module.
